(19) Europäisches Patentamt
European Patent Office
Office européen des brevets

(11) **EP 4 507 238 A1**

(12) **EUROPEAN PATENT APPLICATION**

(43) Date of publication:
**12.02.2025 Bulletin 2025/07**

(21) Application number: **24192190.7**

(22) Date of filing: **31.07.2024**

(51) International Patent Classification (IPC):
**H04L 5/00** *(2006.01)*

(52) Cooperative Patent Classification (CPC):
**H04L 5/001; H04L 5/0007; H04L 5/0037;**
**H04L 5/0094; H04L 5/0098**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.08.2023 US 202363531917 P**
**10.07.2024 US 202418768433**

(71) Applicant: **Meta Platforms Technologies, LLC**
**Menlo Park, CA 94025 (US)**

(72) Inventors:
• **Lim, Suhwan**
**Menlo Park (US)**
• **Yu, Liwen**
**Menlo Park (US)**
• **Wong, Curt**
**Menlo Park (US)**
• **Ji, Zhu**
**Menlo Park (US)**

(74) Representative: **Murgitroyd & Company**
**Murgitroyd House**
**165-169 Scotland Street**
**Glasgow G5 8PL (GB)**

(54) **SYSTEMS AND METHODS FOR SIDELINK CARRIER AGGREGATION COMMUNICATION**

(57) Systems, methods, and devices for wireless sidelink operations may include a first device including a transceiver and one or more processors configured to establish, via the transceiver, a sidelink connection with a second UE. The first UE may determine to operate in a carrier aggregation mode, for communication via the sidelink connection. The first UE may operate the sidelink connection according to a set of predefined parameters per component carrier (CC), responsive to determining to operate in the carrier aggregation mode.

FIG. 6

EP 4 507 238 A1

**Description**

**FIELD OF DISCLOSURE**

The present disclosure is generally related to wireless communication between devices, including but not limited to, systems and methods for wireless sidelink carrier aggregation communication.

**BACKGROUND**

Augmented reality (AR), virtual reality (VR), and mixed reality (MR) are becoming more prevalent, which such technology being supported across a wider variety of platforms and device. Some AR/VR/MR devices or wearable devices may communicate with other devices within an environment via respective sidelink communication channels.

**SUMMARY**

In one aspect, there is provided a method. The method includes establishing, by a first user equipment (UE), a sidelink connection with a second UE. The method further includes determining, by the first UE, to operate in a carrier aggregation mode, for communication via the sidelink connection and operating, by the first UE, the sidelink connection according to a set of predefined parameters, responsive to determining to operate in the carrier aggregation mode.

In some embodiments, the set of predefined parameters include a selected sub-carrier spacing (SCS) value selected from a plurality of SCS values. In some embodiments, operating the sidelink connection includes modifying a size of a resource block (RB) size according to the SCS value. In some embodiments, operating the sidelink connection includes selecting a maximum transmission bandwidth according to the SCS value. In some embodiments, the maximum transmission bandwidth is selected according to the SCS value and a channel bandwidth corresponding to the sidelink connection. In some embodiments, operating the sidelink connection includes selecting a minimum guardband, according to the SCS value. In some embodiments, the minimum guardband is selected according to the SCS value and a channel bandwidth corresponding to the sidelink connection. In some embodiments, the set of predefined parameters includes a reference measurement channel (RMC) configuration corresponding to an adjacent channel selectivity (ACS) configuration. In some embodiments, the first UE includes at least one of a first UE of a first pedestrian or a first vehicle, and the second UE includes at least one of a second UE of a second pedestrian or a second vehicle. In some embodiments, the method includes transmitting, by the first UE to the second UE, a signal indicating to operate in the carrier aggregation mode.

In another aspect, there is provided a first user equipment (UE) including a wireless transceiver and one or more processors configured to establish, via the wireless transceiver, a sidelink connection with a second UE. The one or more processors are further configured to determine to operate in a carrier aggregation mode, for communication via the sidelink connection and operate the sidelink connection according to a set of predefined parameters, responsive to determining to operate in the carrier aggregation mode.

In some embodiments, the set of predefined parameters include a selected sub-carrier spacing (SCS) value selected from a plurality of SCS values. In some embodiments, operating the sidelink connection includes modifying a size of a resource block (RB) size according to the SCS value. In some embodiments, operating the sidelink connection includes selecting a maximum transmission bandwidth according to the SCS value. In some embodiments, the maximum transmission bandwidth is selected according to the SCS value and a channel bandwidth corresponding to the sidelink connection. In some embodiments, operating the sidelink connection includes selecting a minimum guardband, according to the SCS value. In some embodiments, the minimum guardband is selected according to the SCS value and a channel bandwidth corresponding to the sidelink connection. In some embodiments, the set of predefined parameters includes a reference measurement channel (RMC) configuration corresponding to an adjacent channel selectivity (ACS) configuration. In some embodiments, the first UE includes at least one of a first UE of a first pedestrian or a first vehicle, and the second UE includes at least one of a second UE of a second pedestrian or a second vehicle.

In yet another aspect, there is provided a first user equipment (UE) including a wireless transceiver and one or more processors configured to establish, via the wireless transceiver, a sidelink connection with a second UE. The one or more processors are further configured to receive, from the second UE, an indication to operate in a carrier aggregation mode, for communication via the sidelink connection and operate the sidelink connection according to a set of predefined parameters, responsive to determining to operate in the carrier aggregation mode.

**BRIEF DESCRIPTION OF THE DRAWINGS**

The accompanying drawings are not intended to be drawn to scale. Like reference numbers and designations in the various drawings indicate like elements. For purposes of clarity, not every component can be labeled in every drawing.

FIG. 1 is a diagram of an example wireless communication system, according to an example implementation of the present disclosure.

FIG. 2 is a diagram of a console and a head wearable display for presenting augmented reality or virtual reality, according to an example implementation of the present disclosure.

FIG. 3 is a diagram of a head wearable display, according to an example implementation of the present disclosure.

FIG. 4 is a block diagram of a computing environment according to an example implementation of the present disclosure.

FIG. 5 is a block diagram of a system for wireless sidelink carrier aggregation communication, according to an example implementation of the present disclosure.

FIG. 6 is a flowchart showing an example method for wireless sidelink carrier aggregation communication, according to an example implementation of the present disclosure.

## DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

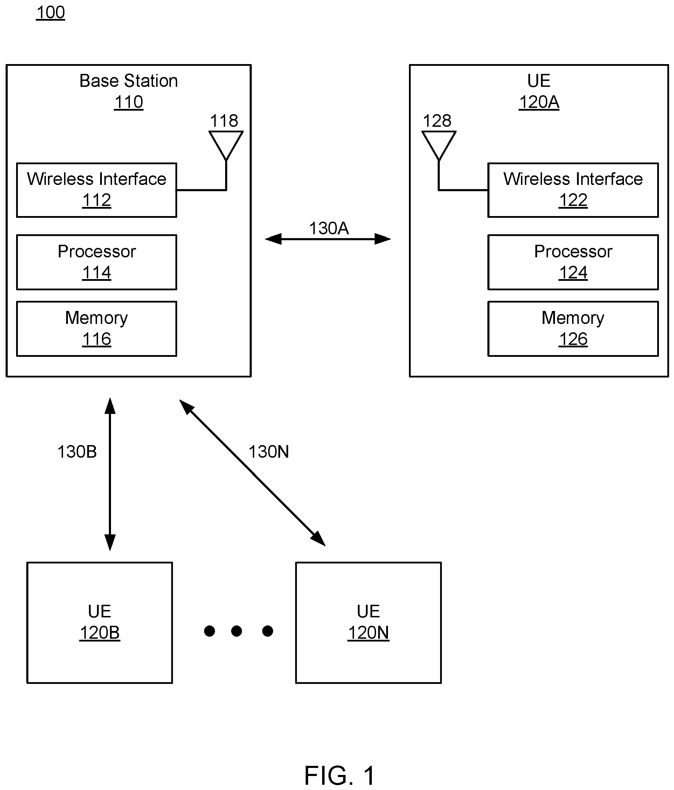

FIG. 1 illustrates an example wireless communication system 100. The wireless communication system 100 may include a base station 110 (also referred to as "a wireless communication node 110" or "a station 110") and one or more user equipment (UEs) 120A, 120B, 120N (also referred to as "wireless communication devices 120" or "terminal devices 120"). The base station 110 and the UEs 120A, 120B, 120N may communicate through wireless commination links 130A, 130B, 130N. The wireless communication link 130A, 130B, 130N may be a cellular communication link conforming to 3G, 4G, 5G or other cellular communication protocols or a Wi-Fi communication protocol. In one example, the wireless communication link 130 supports, employs or is based on an orthogonal frequency division multiple access (OFDMA). In one aspect, the UEs 120A, 120B, 120N are located within a geographical boundary with respect to the base station 110, and may communicate with or through the base station 110. In some embodiments, the wireless communication system 100 includes more, fewer, or different components than shown in FIG. 1. For example, the wireless communication system 100 may include one or more additional base stations 110 than shown in FIG. 1.

In some embodiments, the UE 120A, 120B, 120N may be a user device such as a mobile phone, a smart phone, a personal digital assistant (PDA), tablet, laptop computer, wearable computing device, etc. Each UE 120A, 120B, 120N may communicate with the base station 110 through a corresponding communication link 130A, 130B, 130N. For example, the UE 120A, 120B, 120N may transmit data to a base station 110 through a wireless communication link 130, and receive data from the base station 110 through the wireless communication link 130. Example data may include audio data, image data, text, etc. Communication or transmission of data by the UE 120A, 120B, 120N to the base station 110 may be referred to as an uplink communication. Communication or reception of data by the UE 120A, 120B, 120N from the base station 110 may be referred to as a downlink communication. In some embodiments, the UE 120A includes a wireless interface 122, a processor 124, a memory device 126, and one or more antennas 128. These components may be embodied as hardware, software, firmware, or a combination thereof. In some embodiments, the UE 120A includes more, fewer, or different components than shown in FIG. 1. For example, the UE 120A may include an electronic display and/or an input device. For example, the UE 120A may include additional antennas 128 and wireless interfaces 122 than shown in FIG. 1.

The antenna 128 may be a component that receives a radio frequency (RF) signal and/or transmit a RF signal through a wireless medium. The RF signal may be at a frequency between 200 MHz to 100 GHz. The RF signal may have packets, symbols, or frames corresponding to data for communication. The antenna 128 may be a dipole antenna, a patch antenna, a ring antenna, or any suitable antenna for wireless communication. In one aspect, a single antenna 128 is utilized for both transmitting the RF signal and receiving the RF signal. In one aspect, different antennas 128 are utilized for transmitting the RF signal and receiving the RF signal. In one aspect, multiple antennas 128 are utilized to support multiple-in, multiple-out (MIMO) communication.

The wireless interface 122 includes or is embodied as a transceiver for transmitting and receiving RF signals through a wireless medium. The wireless interface 122 may communicate with a wireless interface 112 of the base station 110 through a wireless communication link 130A. In one configuration, the wireless interface 122 is coupled to one or more antennas 128. In one aspect, the wireless interface 122 may receive the RF signal at the RF frequency received through antenna 128, and downconvert the RF signal to a baseband frequency (e.g., 0~1 GHz). The wireless interface 122 may provide the downconverted signal to the processor 124. In one aspect, the wireless interface 122 may receive a baseband signal for transmission at a baseband frequency from the processor 124, and upconvert the baseband signal to generate a RF signal. The wireless interface 122 may transmit the RF signal through the antenna 128.

The processor 124 is a component that processes data. The processor 124 may be embodied as field programmable gate array (FPGA), application specific integrated circuit (ASIC), a logic circuit, etc. The processor 124 may obtain instructions from the memory device 126, and executes the instructions. In one aspect, the processor 124 may receive downconverted data at the baseband frequency from the wireless interface 122, and decode or process the downconverted data. For example, the processor 124 may generate audio data or image data according to the downconverted data, and present an audio indicated by the audio data and/or an image indicated by the image data to a user of the UE 120A. In one aspect, the processor 124 may generate or obtain data for transmission at the baseband frequency, and encode or process the data. For example, the processor 124 may encode or process image data or audio data at the baseband frequency, and provide the encoded or processed data to the wireless interface 122 for transmission.

The memory device 126 is a component that stores data. The memory device 126 may be embodied as random access memory (RAM), flash memory, read only memory (ROM), erasable programmable read-only memory (EPROM), electrically erasable programmable read-only memory (EEPROM), registers, a hard disk, a removable disk, a CD-ROM, or any device capable for storing data. The memory device 126 may be embodied as a non-transitory computer readable medium storing instructions executable by the processor 124 to perform various functions of the UE 120A disclosed herein. In some embodiments, the memory device 126 and the processor 124 are integrated as a single component.

In some embodiments, each of the UEs 120B... 120N includes similar components of the UE 120A to communicate with the base station 110. Thus, detailed description of duplicated portion thereof is omitted herein for the sake of brevity.

In some embodiments, the base station 110 may be an evolved node B (eNB), a serving eNB, a target eNB, a femto station, or a pico station. The base station 110 may be communicatively coupled to another base station 110 or other communication devices through a wireless communication link and/or a wired communication link. The base station 110 may receive data (or a RF signal) in an uplink communication from a UE 120A, 120B, 120N. Additionally or alternatively, the base station 110 may provide data to another UE 120A, 120B, 120N, another base station, or another communication device. Hence, the base station 110 allows communication among UEs 120A, 120B, 120N associated with the base station 110, or other UEs associated with different base stations. In some embodiments, the base station 110 includes a wireless interface 112, a processor 114, a memory device 116, and one or more antennas 118. These components may be embodied as hardware, software, firmware, or a combination thereof. In some embodiments, the base station 110 includes more, fewer, or different components than shown in FIG. 1. For example, the base station 110 may include an electronic display and/or an input device. For example, the base station 110 may include additional antennas 118 and wireless interfaces 112 than shown in FIG. 1.

The antenna 118 may be a component that receives a radio frequency (RF) signal and/or transmit a RF signal through a wireless medium. The antenna 118 may be a dipole antenna, a patch antenna, a ring antenna, or any suitable antenna for wireless communication. In one aspect, a single antenna 118 is utilized for both transmitting the RF signal and receiving the RF signal. In one aspect, different antennas 118 are utilized for transmitting the RF signal and receiving the RF signal. In one aspect, multiple antennas 118 are utilized to support multiple-in, multiple-out (MIMO) communication.

The wireless interface 112 includes or is embodied as a transceiver for transmitting and receiving RF signals through a wireless medium. The wireless interface 112 may communicate with a wireless interface 122 of the UE 120A through a wireless communication link 130A. In one configuration, the wireless interface 112 is coupled to one or more antennas 118. In one aspect, the wireless interface 112 may receive the RF signal at the RF frequency received through antenna 118, and downconvert the RF signal to a baseband frequency (e.g., 0~1 GHz). The wireless interface 112 may provide the downconverted signal to the processor 124. In one aspect, the wireless interface 122 may receive a baseband signal for transmission at a baseband frequency from the processor 114, and upconvert the baseband signal to generate a RF signal. The wireless interface 112 may transmit the RF signal through the antenna 118.

The processor 114 is a component that processes data. The processor 114 may be embodied as FPGA, ASIC, a logic circuit, etc. The processor 114 may obtain instructions from the memory device 116, and executes the instructions. In one aspect, the processor 114 may receive downconverted data at the baseband frequency from the wireless interface 112, and decode or process the downconverted data. For example, the processor 114 may generate audio data or image data according to the downconverted data. In one aspect, the processor 114 may generate or obtain data for transmission at the baseband frequency, and encode or process the data. For example, the processor 114 may encode or process image data or audio data at the baseband frequency, and provide the encoded or processed data to the wireless interface 112 for transmission. In one aspect, the processor 114 may set, assign, schedule, or allocate communication resources for different UEs 120A, 120B, 120N. For example, the processor 114 may set different modulation schemes, time slots, channels, frequency bands, etc. for UEs 120A, 120B, 120N to avoid interference. The processor 114 may generate data (or UL CGs) indicating configuration of communication resources, and provide the data (or UL CGs) to the wireless interface 112 for transmission to the UEs 120A, 120B, 120N.

The memory device 116 is a component that stores data. The memory device 116 may be embodied as RAM, flash memory, ROM, EPROM, EEPROM, registers, a hard disk, a removable disk, a CD-ROM, or any device capable for storing data. The memory device 116 may be embodied as a non-transitory computer readable medium storing instructions executable by the processor 114 to perform various functions of the base station 110 disclosed herein. In some embodiments, the memory device 116 and the processor 114 are integrated as a single component.

In some embodiments, communication between the base station 110 and the UE 120A, 120B, 120N is based on one or more layers of Open Systems Interconnection (OSI) model. The OSI model may include layers including: a physical layer, a Medium Access Control (MAC) layer, a Radio Link Control (RLC) layer, a Packet Data Convergence Protocol (PDCP) layer, a Radio Resource Control (RRC) layer, a Non Access Stratum (NAS) layer or an Internet Protocol (IP) layer, and other layer.

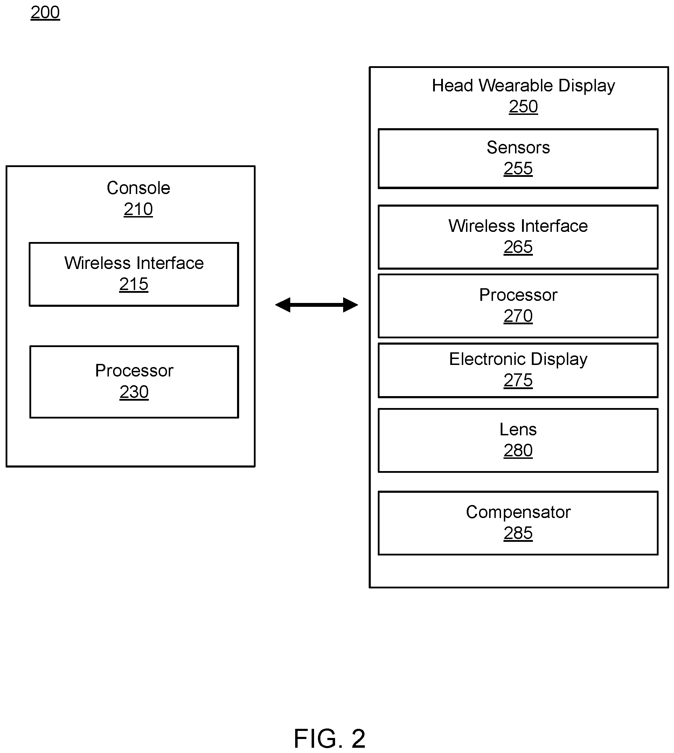

FIG. 2 is a block diagram of an example artificial reality system environment 200. In some embodiments, the artificial reality system environment 200 includes a HWD 250 worn by a user, and a console 210 providing content of artificial reality (e.g., augmented reality, virtual reality, mixed reality) to the HWD 250. Each of the HWD 250 and the console 210 may be a separate UE 120A, 120B, 120N. The HWD 250 may be referred to as, include, or be part of a head mounted display (HMD), head mounted device (HMD), head wearable device (HWD), head worn display (HWD) or head worn device (HWD). The HWD 250 may detect its location and/or orientation of the HWD 250 as well as a shape, location, and/or an orientation of the body/hand/face of the user, and provide the detected location/or orientation of the HWD 250 and/or tracking information indicating the shape, location, and/or orientation of the body/hand/face to the console 210. The console 210 may generate image data indicating an image of the artificial reality according to the detected location and/or orientation of the HWD 250, the detected shape, location and/or orientation of the body/hand/face of the user, and/or a user input for the artificial reality, and transmit the image data to the HWD 250 for presentation. In some embodiments, the artificial reality system environment 200 includes more, fewer, or different components than shown in FIG. 2. In some embodiments, functionality of one or more components of the artificial reality system environment 200 can be distributed among the components in a different manner than is described here. For example, some of the functionality of the console 210 may be performed by the HWD 250. For example, some of the functionality of the HWD 250 may be performed by the console 210. In some embodiments, the console 210 is integrated as part of the HWD 250.

In some embodiments, the HWD 250 is an electronic component that can be worn by a user and can present or provide an artificial reality experience to the user. The HWD 250 may render one or more images, video, audio, or some combination thereof to provide the artificial reality experience to the user. In some embodiments, audio is presented via an external device (e.g., speakers and/or headphones) that receives audio information from the HWD 250, the console 210, or both, and presents audio based on the audio information. In some embodiments, the HWD 250 includes sensors 255, a wireless interface 265, a processor 270, an electronic display 275, a lens 280, and a compensator 285. These components may operate together to detect a location of the HWD 250 and a gaze direction of the user wearing the HWD 250, and render an image of a view within the artificial reality corresponding to the detected location and/or orientation of the HWD 250. In other embodiments, the HWD 250 includes more, fewer, or different components than shown in FIG. 2.

In some embodiments, the sensors 255 include electronic components or a combination of electronic components and software components that detect a location and an orientation of the HWD 250. Examples of the sensors 255 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 255 detect the translational movement and the rotational movement, and determine an orientation and location of the HWD 250. In one aspect, the sensors 255 can detect the translational movement and the rotational movement with respect to a previous orientation and location of the HWD 250, and determine a new orientation and/or location of the HWD 250 by accumulating or integrating the detected translational movement and/or the rotational movement. Assuming for an example that the HWD 250 is oriented in a direction 25 degrees from a reference direction, in response to detecting that the HWD 250 has rotated 20 degrees, the sensors 255 may determine that the HWD 250 now faces or is oriented in a direction 45 degrees from the reference direction. Assuming for another example that the HWD 250 was located two feet away from a reference point in a first direction, in response to detecting that the HWD 250 has moved three feet in a second direction, the sensors 255 may determine that the HWD 250 is now located at a vector multiplication of the two feet in the first direction and the three feet in the second direction.

In some embodiments, the sensors 255 include eye trackers. The eye trackers may include electronic components or a combination of electronic components and software components that determine a gaze direction of the user of the HWD 250. In some embodiments, the HWD 250, the console 210 or a combination of them may incorporate the gaze direction of the user of the HWD 250 to generate image data for artificial reality. In some embodiments, the eye trackers include two eye trackers, where each eye tracker captures an image of a corresponding eye and determines a gaze direction of the eye. In one example, the eye tracker determines an angular rotation of the eye, a translation of the eye, a change in the torsion of the eye, and/or a change in shape of the eye, according to the captured image of the eye, and determines the relative gaze direction with respect to the HWD 250, according to the determined angular rotation, translation and the change in the torsion of the eye. In one approach, the eye tracker may shine or project a predetermined reference or structured pattern on a portion of the eye, and capture an image of the eye to analyze the pattern projected on the portion of the eye to determine a relative gaze direction of the eye with respect to the HWD 250. In some embodiments, the eye trackers incorporate the orientation of the HWD 250 and the relative gaze direction with respect to the HWD 250 to determine a gate direction of the user. Assuming for an example that the HWD 250 is oriented at a direction 30 degrees from a reference direction, and the relative gaze direction of the HWD 250 is -10 degrees (or 350 degrees) with respect to the HWD 250, the eye trackers may determine that the gaze direction of the user is 20 degrees from the reference direction. In some embodiments, a user of the HWD 250 can configure the HWD 250 (e.g., via user settings) to enable or disable the eye trackers. In some embodiments, a user of the HWD 250 is prompted to enable or disable the eye trackers.

In some embodiments, the wireless interface 265 includes an electronic component or a combination of an electronic component and a software component that communicates with the console 210. The wireless interface 265 may be or correspond to the wireless interface 122. The wireless interface 265 may communicate with a wireless interface 215 of the console 210 through a wireless communication link through the base station 110. Through the communication link, the wireless interface 265 may transmit to the console 210 data indicating the determined location and/or orientation of the HWD 250, and/or the determined gaze direction of the user. Moreover, through the communication link, the wireless interface 265 may receive from the console 210 image data indicating or corresponding to an image to be rendered and additional data associated with the image.

In some embodiments, the processor 270 includes an electronic component or a combination of an electronic component and a software component that generates one or more images for display, for example, according to a change in view of the space of the artificial reality. In some embodiments, the processor 270 is implemented as a part of the processor 124 or is communicatively coupled to the processor 124. In some embodiments, the processor 270 is implemented as a processor (or a graphical processing unit (GPU)) that executes instructions to perform various functions described herein. The processor 270 may receive, through the wireless interface 265, image data describing an image of artificial reality to be rendered and additional data associated with the image, and render the image to display through the electronic display 275. In some embodiments, the image data from the console 210 may be encoded, and the processor 270 may decode the image data to render the image. In some embodiments, the processor 270 receives, from the console 210 in additional data, object information indicating virtual objects in the artificial reality space and depth information indicating depth (or distances from the HWD 250) of the virtual objects. In one aspect, according to the image of the artificial reality, object information, depth information from the console 210, and/or updated sensor measurements from the sensors 255, the processor 270 may perform shading, reprojection, and/or blending to update the image of the artificial reality to correspond to the updated location and/or orientation of the HWD 250. Assuming that a user rotated his head after the initial sensor measurements, rather than recreating the entire image responsive to the updated sensor measurements, the processor 270 may generate a small portion (e.g., 10 %) of an image corresponding to an updated view within the artificial reality according to the updated sensor measurements, and append the portion to the image in the image data from the console 210 through reprojection. The processor 270 may perform shading and/or blending on the appended edges. Hence, without recreating the image of the artificial reality according to the updated sensor measurements, the processor 270 can generate the image of the artificial reality.

In some embodiments, the electronic display 275 is an electronic component that displays an image. The electronic display 275 may, for example, be a liquid crystal display or an organic light emitting diode display. The electronic display 275 may be a transparent display that allows the user to see through. In some embodiments, when the HWD 250 is worn by a user, the electronic display 275 is located proximate (e.g., less than 3 inches) to the user's eyes. In one aspect, the electronic display 275 emits or projects light towards the user's eyes according to image generated by the processor 270.

In some embodiments, the lens 280 is a mechanical component that alters received light from the electronic display 275. The lens 280 may magnify the light from the electronic display 275, and correct for optical error associated with the light. The lens 280 may be a Fresnel lens, a convex lens, a concave lens, a filter, or any suitable optical component that alters the light from the electronic display 275. Through the lens 280, light from the electronic display 275 can reach the pupils, such that the user can see the image displayed by the electronic display 275, despite the close proximity of the electronic display 275 to the eyes.

In some embodiments, the compensator 285 includes an electronic component or a combination of an electronic component and a software component that performs compensation to compensate for any distortions or aberrations. In one aspect, the lens 280 introduces optical aberrations such as a chromatic aberration, a pin-cushion distortion, barrel distortion, etc. The compensator 285 may determine a compensation (e.g., predistortion) to apply to the image to be rendered from the processor 270 to compensate for the distortions caused by the lens 280, and apply the determined compensation to the image from the processor 270. The compensator 285 may provide the predistorted image to the electronic display 275.

In some embodiments, the console 210 is an electronic component or a combination of an electronic component and a software component that provides content to be rendered to the HWD 250. In one aspect, the console 210 includes a wireless interface 215 and a processor 230. These components may operate together to determine a view (e.g., a FOV of the user) of the artificial reality corresponding to the location of the HWD 250 and the gaze direction of the user of the HWD 250, and can generate image data indicating an image of the artificial reality corresponding to the determined view. In addition, these components may operate together to generate additional data associated with the image. Additional data may be information associated with presenting or rendering the artificial reality other than the image of the artificial reality. Examples of additional data include, hand model data, mapping information for translating a location and an orientation of the HWD 250 in a physical space into a virtual space (or simultaneous localization and mapping (SLAM) data), eye tracking data, motion vector information, depth information, edge information, object information, etc. The console 210 may provide the image data and the additional data to the HWD 250 for presentation of the artificial reality. In other embodiments, the console 210 includes more, fewer, or different components than shown in FIG. 2. In some embodiments, the console 210 is integrated as part of the HWD 250.

In some embodiments, the wireless interface 215 is an electronic component or a combination of an electronic component and a software component that communicates with the HWD 250. The wireless interface 215 may be or correspond to the wireless interface 122. The wireless interface 215 may be a counterpart component to the wireless interface 265 to communicate through a communication link (e.g., wireless communication link). Through the communication link, the wireless interface 215 may receive from the HWD 250 data indicating the determined location and/or orientation of the HWD 250, and/or the determined gaze direction of the user. Moreover, through the communication link, the wireless interface 215 may transmit to the HWD 250 image data describing an image to be rendered and additional data associated with the image of the artificial reality.

The processor 230 can include or correspond to a component that generates content to be rendered according to the location and/or orientation of the HWD 250. In some embodiments, the processor 230 is implemented as a part of the processor 124 or is communicatively coupled to the processor 124. In some embodiments, the processor 230 may incorporate the gaze direction of the user of the HWD 250. In one aspect, the processor 230 determines a view of the artificial reality according to the location and/or orientation of the HWD 250. For example, the processor 230 maps the location of the HWD 250 in a physical space to a location within an artificial reality space, and determines a view of the artificial reality space along a direction corresponding to the mapped orientation from the mapped location in the artificial reality space. The processor 230 may generate image data describing an image of the determined view of the artificial reality space, and transmit the image data to the HWD 250 through the wireless interface 215. In some embodiments, the processor 230 may generate additional data including motion vector information, depth information, edge information, object information, hand model data, etc., associated with the image, and transmit the additional data together with the image data to the HWD 250 through the wireless interface 215. The processor 230 may encode the image data describing the image, and can transmit the encoded data to the HWD 250. In some embodiments, the processor 230 generates and provides the image data to the HWD 250 periodically (e.g., every 11 ms).

In one aspect, the process of detecting the location of the HWD 250 and the gaze direction of the user wearing the HWD 250, and rendering the image to the user should be performed within a frame time (e.g., 11 ms or 16 ms). A latency between a movement of the user wearing the HWD 250 and an image displayed corresponding to the user movement can cause judder, which may result in motion sickness and can degrade the user experience. In one aspect, the HWD 250 and the console 210 can prioritize communication for AR/VR, such that the latency between the movement of the user wearing the HWD 250 and the image displayed corresponding to the user movement can be presented within the frame time (e.g., 11 ms or 16 ms) to provide a seamless experience.

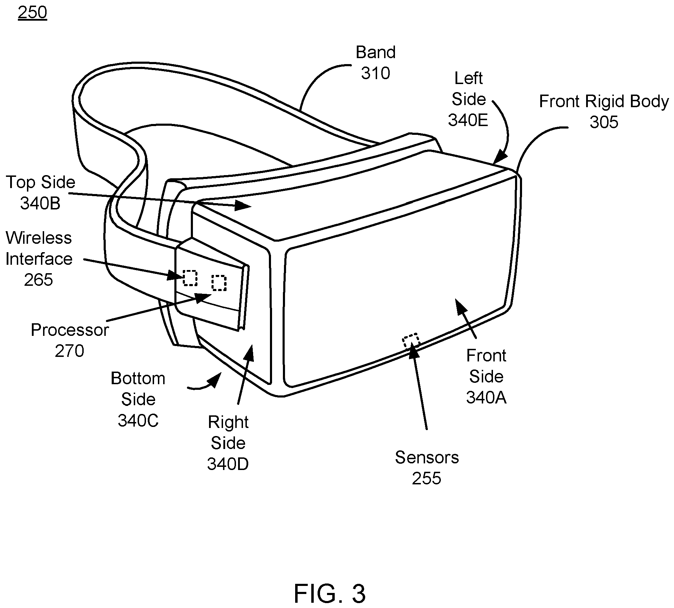

FIG. 3 is a diagram of a HWD 250, in accordance with an example embodiment. In some embodiments, the HWD 250 includes a front rigid body 305 and a band 310. In the embodiment shown by FIG. 3, the front rigid body 305 comprises a front side 340A, a top side 340B, a bottom side 340C, a right side 340D and a left side 340E. The front rigid body 305 also includes the electronic display 275 (not shown in FIG. 3), the lens 280 (not shown in FIG. 3), the sensors 255, the wireless interface 265, and the processor 270. In the embodiment shown by FIG. 3, the wireless interface 265, the processor 270, and the sensors 255 are located within the front rigid body 205, and may not be visible externally. In other embodiments, the HWD 250 has a different configuration than shown in FIG. 3. For example, the wireless interface 265, the processor 270, and/or the sensors 255 may be in different locations than shown in FIG. 3.

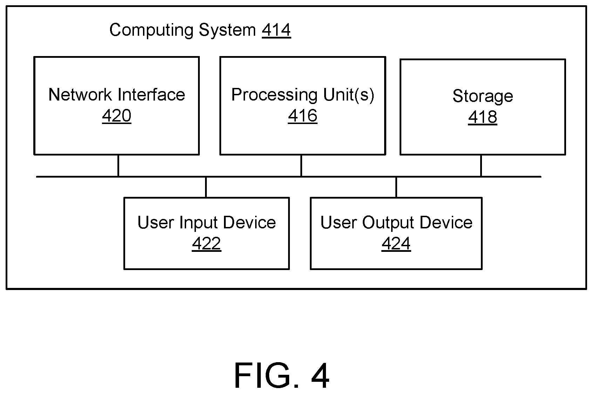

Various operations described herein can be implemented on computer systems. FIG. 4 shows a block diagram of a representative computing system 414 usable to implement the present disclosure. In some embodiments, the source devices 110, the sink device 120, the console 210, the HWD 250 are implemented by the computing system 414. Computing system 414 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 414 can be implemented to provide VR, AR, MR experience. In some embodiments, the computing system 414 can include conventional computer components such as processors 416, storage device 418, network interface 420, user input device 422, and user output device 424.

Network interface 420 can provide a connection to a wide area network (e.g., the Internet) to which WAN interface of a remote server system is also connected. Network interface 420 can include a wired interface (e.g., Ethernet) and/or a wireless interface implementing various RF data communication standards such as Wi-Fi, Bluetooth, or cellular data network standards (e.g., 3G, 4G, 5G, 60 GHz, LTE, etc.).

The network interface 420 may include a transceiver to allow the computing system 414 to transmit and receive data from a remote device using a transmitter and receiver. The transceiver may be configured to support transmission/reception supporting industry standards that enables bi-directional communication. An antenna may be attached to transceiver housing and electrically coupled to the transceiver. Additionally or alternatively, a multi-antenna array may be electrically coupled to the transceiver such that a plurality of beams pointing in distinct directions may facilitate in transmitting and/or receiving data.

A transmitter may be configured to wirelessly transmit frames, slots, or symbols generated by the processor unit 416. Similarly, a receiver may be configured to receive frames, slots or symbols and the processor unit 416 may be configured to process the frames. For example, the processor unit 416 can be configured to determine a type of frame and to process the frame and/or fields of the frame accordingly.

User input device 422 can include any device (or devices) via which a user can provide signals to computing system 414; computing system 414 can interpret the signals as indicative of particular user requests or information. User input device 422 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

User output device 424 can include any device via which computing system 414 can provide information to a user. For example, user output device 424 can include a display to display images generated by or delivered to computing system 414. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 424 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 416 can provide various functionality for computing system 414, including any of the functionality described herein as being performed by a server or client, or other functionality associated with message management services.

It will be appreciated that computing system 414 is illustrative and that variations and modifications are possible. Computer systems used in connection with the present disclosure can have other capabilities not specifically described here. Further, while computing system 414 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

Disclosed herein are related to systems and methods for performing sidelink (SL) carrier aggregation (SL-CA) communications. Sidelink operations may be described in various standards requests, for supporting sidelink-carrier aggregation (CA) in an intelligent transportation system (ITS) spectrum. For example, some implementations may include support for LTE SL-CA features for new radio (NR) (e.g., SL carrier (re-)selection, synchronization of aggregated carriers, power control for simultaneous SL transmission, packet duplication, etc.). However, the multiple sub-carrier spacing values may supported in various frequency spectrums (e.g., frequency spectrums at FR1). Such sub-carrier spacing values for SL-CA may include, for example, 15, 30, and/or 60 kilohertz (kHz) at 5G NR system. Additionally, the spectrum utility (SU) to accommodate larger resource block (RB) size in a certain Channel BWs are increased from 4G LTE system in 5G NR system. Also, some implementations may include updating the SL initial access mechanism with the merged SL synchronization signal block (S-SSB) which is based on the sidelink synchronization channel (SLSS) and SL broadcast channel (S-PBCH) for 5G NR SL operation. Furthermore, some implementations may include supporting restricted SL slot constructure for the PSCCH / PSSCH multiplexing method. Based on these improvements, certain enhancements to reference measurements and/or other parameters may be implemented. According to the systems and methods described herein, the present solution may define particular SL parameters / features for RF requirements, particularly for SL-CA operations.

In various embodiments, a first wireless communication device or user equipment (UE) may establish a sidelink connection with a second UE. The first UE may determine to operate in a carrier aggregation (CA) mode for communication via the sidelink connection. The first UE may operate the sidelink connection according to a set of predefined parameters, responsive to determining to operate in the CA mode. According to the various implementations of the present solution, the systems and methods described herein may satisfy various RF requirements for SL-CA operations, while accommodating additional sub-carrier spacing values and satisfying increased spectrum utility and other updated items (e.g., in 5GNR).

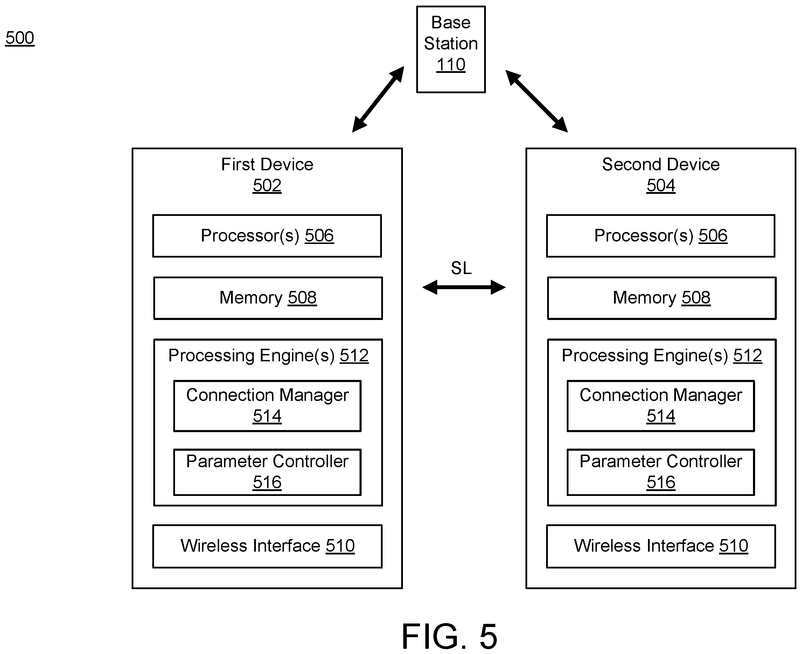

Referring now to FIG. 5, depicted is a block diagram of a system 500 for wireless sidelink carrier aggregation communication, according to an example implementation of the present disclosure. The system 500 may include a first device 502 and a second device 504. In various embodiments, the first device 502 and second device 504 may be configured to establish or maintain a sidelink (SL) connection (denoted as SL in FIG. 5). The first device 502 may be configured to determine to operate in a carrier aggregation (CA) mode for communication via the SL connection. The first device 502 (and second device 504) may be configured to operate the SL connection according to a set of predefined parameters, responsive to determining to operate in the SL-CA mode.

The first device 502 and second device 504 may be similar to the devices, components, elements, or hardware described above. In various embodiments, the first device 502 and/or second device 504 may be a reduced capability (RedCap) device. For example, the first device 502 may be a wearable device. In some embodiments, the first device 502 and second device 504 may be or include devices which provide an extended reality (XR) environment to a user. For example, the first device 502 may be a head wearable device, and the second device 504 may be a console. In some embodiments, the first device 502 may be a device of one user, and the second device 504 may be a device of another user. For example, the first device 502 may be a device corresponding to a vehicle (e.g., an automobile, a bicycle, a motorcycle, a bus) and the second device 504 may be a device of a user (e.g., a pedestrian). Additionally, and in some embodiments, the first device 502 may be a device corresponding to a vehicle, and the second device 504 may be a device corresponding to another vehicle.

The first device 502 and second device 504 may include one or more processors 506 and memory 508. The processor(s) 506 may be similar to the processors 114, 124 of FIG. 1, the processor(s) 230, 270 of FIG. 2 and FIG. 3, and/or processing units 416 of FIG. 4. The memory 508 may be similar to the memory 116, 126 of FIG. 1 and/or storage 418 of FIG. 4. The first device 502 and second device 504 may include a wireless interface 510, which may be similar to the wireless interfaces 112, 122, 215, 265 of FIG. 1 - FIG 3 and/or the network interface 420 of FIG. 4.

The first device 502 and second device 504 may include one or more processing engines 512. The processing engine(s) 512 may be or include any device, component, element, or hardware designed or configured to perform various functions of the device. While shown as embodied on the respective devices 502, 504, in various embodiments, the processing engine(s) 512 may be or include hardware of the wireless interface 510. The processing engine(s) 512 may include a connection manager 514 and a parameter controller 516. While these two processing engine(s) 512 are shown and described, in various embodiments, additional processing engines 512 may be implemented at the device 502, 504 and/or in the wireless interface 510. Further, and in various embodiments, one or more processing engines 512 may be combined with another processing engine 512. Additionally or alternatively, one processing engine 512 may be divided into multiple processing engines 512.

The devices 502, 504 may include a connection manager 514. The connection manager 514 may be or include any device, component, element, or hardware designed or configured to establish, generate, maintain, or otherwise manage various connections (e.g., wireless connections) with one or more endpoints or nodes. In some embodiments, the connection manager 514 may be configured to manage sidelink connections between the first device 502 and second device, and manage uplink/downlink (e.g., non-sidelink) cellular connections between the respective device 502, 504 and a base station 110. In this regard, the connection manager 514 may be configured to manage device-to-device connections as well as device-to-network (or device-to-base station) connections.

The connection manager 514 may be configured to generate, create, or otherwise establish a sidelink (SL) connection between the first device 502 and the second device 504. In some embodiments, the connection manager 514 may be configured to establish the SL connection, by performing device discovery and proximity detection. For example, the connection manager 514 of the first device 502 may be configured to broadcast (e.g., via the wireless interface 510) a discovery signal, and the connection manager 514 of the second device 504 may be configured to detect the discovery signal from the first device 502. The connection managers 514 may be configured to determine a proximity between the devices 502, 504 (e.g., based on a signal strength of the discovery signal sent by the first device 502, and received by the second device 504 in the above example). The connection manager 514 may be configured to perform various additional steps, such as permission and authentication, as may be needed to establish the SL connection.

The connection manager 514 may be configured to determine allocated resources for the SL connection. For example, the connection manager 514 may be configured to determine resources allocated by the base station 110 or core network, for the sidelink connection. In some embodiments, the allocated resources may be or include a particular frequency or frequency range, particular time slots, etc. In some embodiments, the allocated resources may include a frequency in an unlicensed frequency band including ITS spectrum. For example, the unlicensed frequency band may be ITS spectrum (5855 - 5925 MHz) or include n46 (5150 MHz - 5925 MHz), n96 (5925 MHz - 7125 MHz), n102 (5925 MHz - 6425 MHz). In some examples, the unlicensed frequency band may include the upper unlicensed frequency ranges between 5.925 gigahertz (GHz) to 7.125 GHz. The connection manager 514 may be configured to receive allocated resources from the base station 110 or core network, including a particular frequency or frequency range, in which to establish the SL connection between the first device 502 and second device 504.

The connection manager 514 may be configured to generate, maintain, or otherwise establish the SL connection according to the allocated resources (e.g., from the base station or core network). In some embodiments, the connection manager 514 may be configured to establish the SL connection in the unlicensed frequency band. For example, where the allocated resources include a particular frequency or frequency band within the unlicensed frequency band, the connection manager 514 may be configured to establish the SL connection in the unlicensed frequency band.

In some embodiments, the connection manager 514 may be configured to establish the SL connection as a SL-unlicensed (SL-U) connection and/or a SL-carrier aggregation (SL-CA) connection. The SL-U connection may be or include a SL connection which is within the unlicensed frequency band, e.g.,n46, n96 and n102. The SL-CA connection may be or include a SL connection which combines (or aggregates) multiple frequency bands (or carriers) into a single data channel in the unlicensed bands. The connection manager 514 may be configured to establish the SL connection as a SL-U / SL-CA connection, according to the allocated resources from the base station 110 and/or core network.

In some embodiments, the connection manager 514 may be configured to establish and maintain/manage SL connections as well as other cellular (e.g., non-sidelink) connections. For example, the connection manager 514 may be configured to establish and maintain cellular connection(s) with a base station 110. The connection manager 514 may be configured to establish cellular connections with the base station 110 in a manner similar to the wireless communication links 130 described above. In some embodiments, the process in which the connection manager 514 establishes cellular connections with the base station 110 may be similar to establishing the SL connections. For example, the connection manager 514 may be configured to receive a signal broadcast by the base station 110, and establish the connection based on allocated resources from the base station 110. In some embodiments, the connection manager 514 may be configured to establish the cellular connection in a licensed frequency band. For example, the base station 110 and/or core network may allocate resources, such as a frequency band or channel(s), in the licensed frequency band for the cellular connection between the devices 502, 504 and the base station 110. The connection manager 514 may be configured to establish and/or maintain the cellular connection according to the allocated resources (e.g., maintain the cellular connection in the licensed frequency band).

In some embodiments, the connection manager 514 may be configured to establish, maintain, or otherwise co-operate multiple connections. For example, the connection manager 514 may be configured to co-operate a SL connection between the first device 502 and second device 504, and a cellular connection between the respective device 502, 504 and the base station 110. The connection manager 514 may be configured to co-operate the connections by operating, leveraging, or otherwise using the connections together (e.g., in parallel). For example, the connection manager 514 may be configured to transmit various signals / packets / PDUs via the respective connections in different frequency or time periods. In this regard, and in various instances, the connection manager 514 may be configured to leverage the cellular connection to send and/or receive data via the base station 110 from one or more remote sources, and can leverage the SL connection to send and/or receive data between the devices 502, 504 (e.g., relatively locally).

The parameter controller 516 may be designed or configured to select, identify, control, or otherwise determine parameters which are to be used for the SL connection between the first device 502 and the second device 504. In some embodiments, where, as described above, the connection manager 514 determines to establish a SL-CA connection between the first device 502 and the second device 504, the parameter controller 516 may be configured to identify, determine, or otherwise select a set of predefined parameters in which to operate the SL connection, responsive to determining to operate in the CA-mode. For example, the parameter controller 516 may be configured to select a set of predefined parameters associated with a CA-mode, responsive to determining to operate in the CA-mode. The parameter controller 516 may be configured to select the predefined parameters per carrier component (CC), responsive to determining to operate in the CA-mode. In other words, the predefined parameters for the SL connection may include predefined parameters per CC.

In some embodiments, the parameter controller 516 may be configured to select the parameters which are to be tested for verifying compliance / operational settings / etc. relating to the SL connection. For example, prior to deployment of the first device 502, the first device 502 may be tested for SL operation. The parameter controller 516 may be configured to select various parameters for operating the SL connection, during a testing phase and prior to deployment, where the selection of such parameters may be similar to the selection described herein as part of deployment. Accordingly, and in various instances, where the first device 502 determines to operate in a CA-mode (e.g., as part of testing), the first device 502 may be configured select predefined parameters for testing the first device's 502 operation in the CA-mode. In other words, the parameter controller 516 may be configured to select the parameters described herein to verify / evaluate / test the operation of the first device 502 in a SL CA mode (e.g., transmitter and/or receiver operations of a SL CA UE) prior to deployment. When the first device 502 is deployed, the first device 502 may operate the SL connection according to the pre-configured and tested parameters (e.g., parameters for satisfying its own transmission / reception parameters or requirements, and/or coexistence parameters or requirements)/

The parameter controller 516 may be configured to select a sub-carrier spacing (SCS) value in which to use for operating the SL connection in the CA-mode. The parameter controller 516 may be configured to select the SCS value from a plurality of SCS values, such as 15 kilohertz (kHz), 30 kHz, 60 kHz, and so forth. In some embodiments, the parameter controller 516 may be configured to select the SCS value according to allocated resources for the SL connection (e.g., from the base station 110).

The parameter controller 516 may be configured to select, identify, configure, or otherwise determine a channel bandwidth which is to be used for the SL connection. In some embodiments, the parameter controller 516 may be configured to determine the channel bandwidth based on an allocated bandwidth from the base station 110. The parameter controller 516 may be configured to request an allocated bandwidth to use for the SL connection (e.g., based on the application or resource which is executing on the device, based on a pre-configured requested allocated resource for SL connections, etc.). The parameter controller 516 may be configured to determine the channel bandwidth from a plurality of available channel bandwidths, such as (but not limited to) 3 megahertz (MHz), 5 MHz, 10 MHz, 15 MHz, 20 MHz, 25 MHz, 30 MHz, 35 MHz, 40 MHz, 45 MHz, 50 MHz, 60 MHz, 70 MHz, 80 MHz, 90 MHz, and/or 100 MHz. Specially, and in some implementations, up to 70MHz channel bandwidth (CBW) in the ITS spectrum may be supported.

The parameter controller 516 may be configured to select, identify, configure, or otherwise determine a maximum transmission bandwidth configuration $N_{RB}$ for a resource block. In some embodiments, the parameter controller 516 may be configured to determine the maximum transmission bandwidth configuration based on or according to the selected sub-carrier spacing and/or the channel bandwidth. For example, the parameter controller 516 may be configured to determine the maximum transmission bandwidth configuration by cross-referencing the selected sub-carrier spacing and channel bandwidth against a data structure which identifies corresponding maximum transmission bandwidth configurations. The data structure may be maintained locally at the first device 502 and/or remotely stored and accessible to the first device 502. An example of such a data structure is included in Table 1 below.

Table 1. Maximum Transmission Bandwidth Configuration

| SCS (kHz) | Channel Bandwidth (MHz) | | | | | | | | | | | | | | | |
|---|---|---|---|---|---|---|---|---|---|---|---|---|---|---|---|---|
| | 3 | 5 | 10 | 15 | 20 | 25 | 30 | 35 | 40 | 45 | 50 | 60 | 70 | 80 | 90 | 100 |
| | $N_{RB}$ | | | | | | | | | | | | | | | |
| 15 | 15 | 25 | 52 | 79 | 106 | 133 | 160 | 188 | 216 | 242 | 270 | N/A | | | | |
| 30 | N/A | 11 | 24 | 38 | 51 | 65 | 78 | 92 | 106 | 119 | 133 | 162 | 189 | 217 | 245 | 273 |
| 60 | N/A | N/A | 11 | 18 | 24 | 31 | 38 | 44 | 51 | 58 | 65 | 79 | 93 | 107 | 121 | 135 |

The parameter controller 516 may be configured to select, identify, configure, or otherwise determine a minimum guardband. In some embodiments, the parameter controller 516 may be configured to determine the minimum guardband based on or according to the selected sub-carrier spacing and/or the channel bandwidth. The parameter controller 516 may be configured to determine the minimum guardband as a function of the channel bandwidth, the maximum transmission bandwidth configuration, and the sub-carrier spacing. For example, the parameter controller 516 may be configured to calculate the minimum guardband using Equation 1 below, where $BW_{channel}$ is the channel bandwidth, $N_{RB}$ is the maximum transmission bandwidth configuration, and SCS is the sub-carrier spacing, and where $GB_{channel}$ is the minimum guardband (expressed in kHz):

$$GB_{channel} = \frac{(BW_{channel} \times 1000\ (kHz) - N_{RB} \times SCS \times 12)}{2} - \frac{SCS}{2} \qquad Eq.\ 1$$

In some embodiments, similar to determining the maximum transmission bandwidth configuration, the parameter controller 516 may be configured to determine the minimum guardband by cross-referencing the selected sub-carrier spacing and channel bandwidth against a data structure which identifies corresponding minimum guardbands. The data structure may be maintained locally at the first device 502 and/or remotely stored and accessible to the first device 502. An example of such a data structure is included in Table 2, where example minimum guardbands are shown as computed (e.g., using Equation 1 above) for channel bandwidths between 20 MHz and 50 MHz.

Table 2. Minimum Guardbands

| SCS (kHz) | Channel Bandwidth (MHz) | | | | | | | |
|---|---|---|---|---|---|---|---|---|
| | 10 | 20 | 30 | 40 | 50 | 60 | ... | 100 |
| 15 | 312.5 | 452.5 | 592.5 | 552.5 | 692.5 | N/A | N/A | N/A |
| 30 | 665 | 805 | 945 | 905 | 1045 | 825 | ... | 845 |
| 60 | 1010 | 1330 | 1290 | 1610 | 1570 | 1530 | ... | 1370 |

It is noted that certain minimum guardbands may not be applicable at certain combinations of channel bandwidths and SCS values. For example, a minimum guardband may not be applicable at SCS values of 15 kHz for channel bandwidths greater than or equal to 60 MHz, at SCS values of 30 kHz for a 3 MHz channel bandwidth, or at SCS values of 60 kHz for channel bandwidths less than 10 MHz.

The parameter controller 516 may be configured to determine other parameters for operating the SL channel responsive to determining to operate in a NR SL CA-mode. For example, the parameter controller 516 may be configured to determine one or more pre-defined or pre-configured parameters, such as a maximum input level for the first device 502, according to the SL-CA bandwidth class. In some embodiments, the maximum input level may be preconfigured and tested for compliance according to the formulas set forth in Table 3 below, where $10\log_{10}(value)$ is rounded to the nearest 0.5dB.

Table 3. Maximum Input Levels for SL-CA

| Rx Parameter | Units | SL CA Bandwidth Class | |
|---|---|---|---|
| | | A | B |
| Power in largest Transmission Bandwidth Configuration CC | dBm | | $-25 + 10\log_{10}(\text{BW}_{\text{Channel}}/20)^{\text{Note 1}}$ |
| | | | $-27 + 10\log_{10}(\text{BW}_{\text{Channel}}/20)^{\text{Note 2}}$ |
| NOTE 1: | Reference measurement channel is A.7.2.x for 64 QAM. | | |
| NOTE 2: | Reference measurement channel is A.7.2.x for 256 QAM. | | |

The parameter controller 516 may be configured to determine one or more preconfigured and tested parameters for compliance with an adjacent channel selectivity (ACS) value / setting / configuration / requirement. For example, the ACS value may be preconfigured and tested according to Tables 4 through 6 below, depending on various input parameters described therein, such as whether the carrier-aggregation is intra-band carrier aggregation according to the power levels of the interference source.

Table 4. ACS for SL-CA

| | | SL CA bandwidth class |
|---|---|---|
| Rx Parameter | Units | B |
| ACS | dB | 20.0 |

Table 5. ACS for intra-band SL-CA, case 1.

| Rx Parameter | Units | SL CA bandwidth class |
|---|---|---|
| | | B |
| Pw in Transmission Bandwidth Configuration, per CC | dBm | $P_{\text{REFSENS\_SL}}$ + 14 dB |
| $P_{\text{Interferer}}$ | dBm | Aggregated power + 18.5 dB |
| $BW_{\text{Interferer}}$ | MHz | 10 |

(continued)

| Rx Parameter | Units | SL CA bandwidth class |
|---|---|---|
| | | B |
| $F_{Interferer}$ (offset) | MHz | $5+\text{Aggreagted BW}_{Channel}/2$ <br><br> / <br><br> $-(5+\text{Aggregated BW}_{Channel}/2)$ |
| NOTE 1: The interferer is QPSK modulated PUSCH containing data and reference symbols. Normal cyclic prefix is used. <br> NOTE 2: The absolute value of the interferer offset $F_{interferer}$ (offset) may be further adjusted to MHz with SCS the sub-carrier spacing of the carrier closest to the interferer in MHz. The interferer is an NR signal with 15 kHz SCS. | | |

Table 6. ACS for intra-band SL-CA, case 2.

| Rx Parameter | Units | SL CA Bandwidth Class |
|---|---|---|
| | | B |
| Pw in Transmission Bandwidth Configuration, per CC | dBm | $-43.5 + 10\log(N_{RB,c}/N_{RB\_agg})$ |
| $P_{Interferer}$ | dBm | -25 |
| $BW_{Interferer}$ | MHz | 10 |
| $F_{Interferer}$ (offset) | MHz | $5+\text{Aggreagted BW}_{Channel}/2$ <br><br> / <br><br> $-(5+\text{Aggregated BW}_{Channel}/2)$ |
| NOTE 1: The interferer is QPSK modulated PUSCH containing data and reference symbols. Normal cyclic prefix is used. <br> NOTE 2: The absolute value of the interferer offset $F_{interferer}$ (offset) may be further adjusted to MHz with SCS the sub-carrier spacing of the carrier closest to the interferer in MHz. The interferer is an NR signal with 15 kHz SCS. | | |

The parameter controller 516 may be configured to operate the SL connection according to various preconfigured and tested in-band blocking parameters. For example, t the in-band blocking parameters may be tested and preconfigured for compliance with TX/RX requirements / settings / configurations and/or for coexistence with other legacy protocols or signaling (e.g., in instances where the SL-connection is for intra-band contiguous operation), according to Tables 7 and 8 below.

Table 7. In-Band Blocking Parameters for Intra-Band SL-CA.

| Rx Parameter | Units | SL CA bandwidth class |
|---|---|---|
| | | B |
| Pw in Transmission Bandwidth Configuration, per CC | dBm | $P_{REFSENS\_SL}$ + NR SL CA bandwidth class specific value below |
| | dB | 16.0 |
| $BW_{Interferer}$ | MHz | 10 |
| $F_{Ioffset, \, case \, 1}$ | MHz | 15 |

(continued)

| Rx Parameter | Units | SL CA bandwidth class |
|---|---|---|
| | | B |
| $F_{Ioffset,\ case\ 2}$ | MHz | 25 |
| NOTE 1: | The interferer is QPSK modulated PUSCH containing data and reference symbols. Normal cyclic prefix is used. | |

Table 8. In-Band Blocking Parameters for Intra-Band Contiguous SL-CA.

| NR SL CA band | Parameter | Unit | Case 1 | Case 2 |
|---|---|---|---|---|
| SL_n47B | $P_{Interferer}$ | dBm | -44 | -44 |
| | $F_{Interferer}$ (offset) | MHz | $- BW_{channel\ CA}/2 - F_{Ioffset,case\ 1}$ & $+ BW_{channel\ CA}/2 + F_{Ioffset,case\ 1}$ | $\leq - BW_{channel\ CA}/2 - F_{Ioffset,case\ 2}$ & $\geq + BW_{channel\ CA}/2 + F_{Ioffset,case\ 2}$ |
| | $F_{Interferer}$ (Range) | MHz | NOTE 2 | $F_{DL\_low} - 30$ to $F_{DL\_high} + 30$ |
| NOTE 1: | For certain bands, the unwanted modulated interfering signal may not fall inside the UE receive band, but within the first 30 MHz below or above the UE receive band | | | |
| NOTE 2: | For each carrier frequency the requirement is valid for two frequencies: a. the carrier frequency $- BW_{channel\ CA}/2 - FIoffset,\ case\ 1$ and b. the carrier frequency $+ BW_{channel\ CA}/2 + FIoffset,\ case\ 1$ | | | |
| NOTE 3: | $BW_{ohannel\ CA}$ denotes the aggregated channel bandwidth of the wanted signal | | | |

The parameter controller 516 may be configured to operate the SL connection according to various preconfigured and tested out-of-band blocking parameters. For example, the out-of-band blocking parameters (e.g., in instances where the SL-connection is for intra-band contiguous operation) may be tested and preconfigured for compliance with various operational parameters / configuration / settings for TX/RX on the SL connection, and/or for coexistence with legacy communication or signaling, according to Tables 9 and 10 below.

Table 9. Out-of-Band Blocking Parameters for Intra-Band SL-CA.

| Rx Parameter | Units | SL CA Bandwidth Class | | | | |
|---|---|---|---|---|---|---|
| | | B | | | | |
| Pw in Transmission Bandwidth Configuration, per CC | dBm | $P_{REFSENS\_SL} + $ SL CA Bandwidth Class specific value below | | | | |
| | | 9 | | | | |

Table 10. Out-of-Band Blocking Parameters for Intra-Band Contiguous SL-CA.

| NR SL CA band | Parameter | Units | Frequency | | |
|---|---|---|---|---|---|
| | | | Range 1 | Range 2 | Range 3 |
| V2X_47B | $P_{Interferer}$ | dBm | -44 | -30 | -15 |
| | $F_{Interferer}$ (CW) | MHz | $-60 < f - F_{DL\_low} < -30$ or $30 < f - F_{DL\_high} < 60$ | $-85 < f - F_{DL\_low} \leq -60$ or $60 \leq f - F_{DL\_high} < 85$ | $1 \leq f \leq F_{DL\_low} - 85$ or $F_{DL\_high} + 85 \leq f \leq 12750$ |
| NOTE 1: | The power level of the interferer ($P_{Interferer}$) for Range 3 shall be modified to -20 dBm for $F_{Interferer} > 6000$ MHz. | | | | |
| NOTE 2: | The parameter is applied for multi-carrier intra-band con-current receptions when 2 carrier transmissions are activated at the same time. | | | | |

The parameter controller 516 may be configured to operate the SL connection according to various preconfigured and tested spurious response parameters. For example, the spurious response parameters may be preconfigured and tested for TX/RX requirements, as well as coexistence requirements, according to Tables 11 and 12 below.

Table 11. Spurious Response Parameters for Intra-Band Contiguous SL-CA.

| Rx Parameter | Units | SL CA Bandwidth Class | | | | |
|---|---|---|---|---|---|---|
| | | B | | | | |
| Pw in Transmission Bandwidth Configuration, per CC | dBm | $P_{REFSENS\_SL}$ + SL CA Bandwidth Class specific value below | | | | |
| | | 9 | | | | |
| NOTE 1: The requirement is applied for multi-carrier intra-band con-current receptions when 2 carrier transmissions are activated at the same time. | | | | | | |
| NOTE 2: Reference measurement channel is A.7.2 | | | | | | |

Table 12. Spurious Response Parameters for Intra-Band Contiguous SL-CA.

| Parameter | Unit | Level |
|---|---|---|
| $p_{Interferer}$ (CW) | dBm | -44 |
| $F_{Interferer}$ | MHz | Spurious response frequencies |
| NOTE 1: The requirement is applied for multi-carrier intra-band con-current receptions when 2 carrier transmissions are activated at the same time. | | |

The parameter controller 516 may be configured to operate the SL connection according to various preconfigured and tested wideband intermodulation. For example, similar to the above-mentioned parameters, the wideband intermodulation parameters may be tested and preconfigured for coexistence compliance, as well as TX/RX operating configurations, according to Table 13 below.

Table 13. Wide Band Intermodulation Parameters for Intra-Band Contiguous SL-CA.

| Rx parameter | Units | SL CA Bandwidth Class | | | | |
|---|---|---|---|---|---|---|
| | | B | | | | |
| $P_w$ in Transmission Bandwidth Configuration, per CC | dBm | $P_{REFSENS\_SL}$ + SL CA Bandwidth Class specific value below | | | | |
| | | 9 | | | | |
| $p_{Interferer\ 1}$ (CW) | dBm | -46 | | | | |
| $p_{Interferer\ 2}$ (Modulated) | dBm | -46 | | | | |
| $BW_{Interferer\ 2}$ | MHz | 10 | | | | |
| $F_{Interferer\ 1}$ (Offset) | MHz | $-F_{offset}-15$ / $+ F_{offset}+15$ | | | | |
| $F_{Interferer\ 2}$ (Offset) | MHz | $2*F_{Interferer\ 1}$ | | | | |
| NOTE 1: The requirement is applied for multi-carrier intra-band con-current receptions when 2 carrier transmissions are activated at the same time. | | | | | | |
| NOTE 2: The $F_{interferer\ 1}$ (offset) is the frequency separation of the center frequency of the carrier closest to the interferer and the center frequency of the CW interferer and $F_{interferer\ 2}$ (offset) is the frequency separation of the center frequency of the carrier closest to the interferer and the center frequency of the modulated interferer. | | | | | | |

Upon determining the parameter(s) for operating the SL connection in the CA-mode, the wireless interface 510 may be configured to control, communicate, configure, or otherwise operate the SL connection according to the parameters selected / determined / preconfigured / tested by the parameter controller 516. For example, the wireless interface 510 may be configured to operate the SL connection based on or according to the selected / determined / predetermined parameters, including the maximum transmission bandwidth configuration, the minimum guardband, the maximum input level, the ACS configuration and corresponding parameters, the in-band blocking parameters, the out-of-band blocking parameters, the spurious response parameters, and/or the wide band intermodulation parameters.

In some embodiments, responsive to determining to operate in the CA-mode, the wireless interface 510 (e.g., of the first device 502) may be configured to transmit, communicate, send, or otherwise provide a signal / message / indication to the second device 504. The indication may be configured to indicate, e.g., to the second device 504, to operate in the CA-mode. In some embodiments, the indication may indicate the parameters used to operate the SL connection in the CA-mode. In this regard, the first device 502 may be a primary device which indicates the parameters to the second device 504, which may be a secondary device. In some embodiments, the indication may indicate various information relating to allocated resources / information of the channel / etc., such that the second device 504 may be configured to independently derive the parameters used to operate the SL connection in the CA-mode.

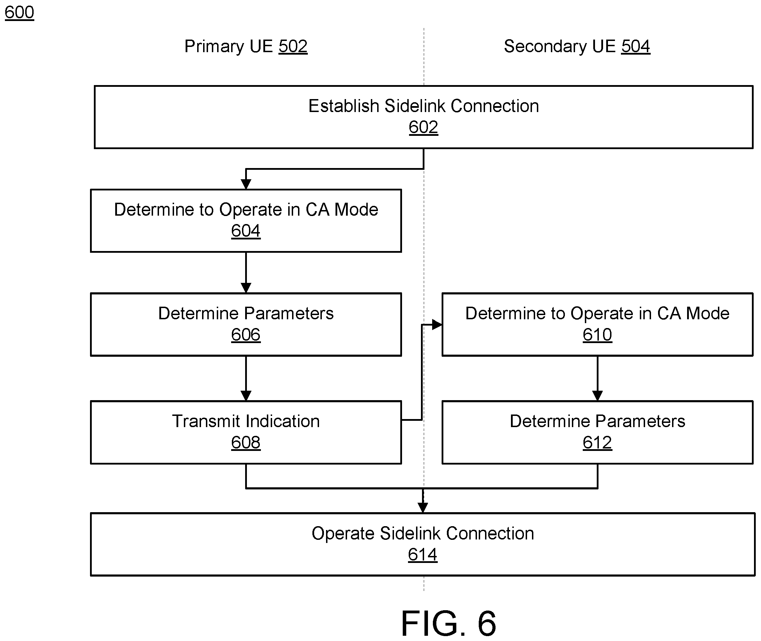

Referring now to FIG. 6, depicted is a flowchart showing an example method 600 for wireless sidelink carrier-aggregation communication, according to an example implementation of the present disclosure. The method 600 may be executed, performed, or otherwise implemented by the devices, components, elements, or hardware described above with reference to FIG. 1 - FIG. 5, such as the first device 502 (or a primary device / user equipment (UE) 502) and/or the second device 504 (or a secondary device / UE 504). As a brief overview, the method 600 may begin at step 602, where the first UE 502 establishes a sidelink connection. At step 604, the first UE 502 may determine to operate in a carrier aggregation mode. At step 606, the first UE 502 may determine parameters. At step 608, the first UE 502 may transmit an indication to the second UE 504. At step 610, the second UE 504 may determine to operate in a carrier aggregation mode. At step 612, the second UE 504 may determine parameters. As step 614, the first UE 502 (and the second UE 504) may operate the sidelink connection.

At step 602, where the first UE establishes a sidelink connection. In some embodiments, the first UE may generate, create, or otherwise establish a SL connection between the first UE and the second UE. The first UE may establish the SL connection between the first UE and the second UE, to exchange, transmit, receive, or otherwise share data / information / packets / messages / transmissions between the first device and the second device (e.g., locally). In this regard, the SL connection may be a device-to-device (D2D) connection. The first UE may establish the SL connection responsive to a message / beacon / frame / signal broadcast by one of the first UE and the second UE. For example, one of the devices may send discovery or communication signals by broadcasting an advertising signal (such as a PRACH signal) to nearby devices. The other device may receive or otherwise detect the discovery/communication signal, and the devices may establish the SL connection responsive thereto.

The first UE may establish the SL connection according to resources allocated by the core network. For example, as part of establishing the SL connection, the core network may allocate certain resources (such as certain frequency bands or ranges, a slot schedule, etc.) to devices operating / managing / maintaining / establishing a SL connection. The first UE may establish the SL connection between the first UE and the second UE, according to the allocated resources. For example, the core network may allocate resources in the unlicensed frequency band, allocate resources across a plurality of frequency band (e.g., for carrier aggregation), etc. The first device may establish the SL connection according to the allocated resources. Continuing the above example, the first device may establish the SL connection as an unlicensed SL connection (e.g., SL-U connection) and/or a carrier aggregation SL connection (e.g., SL-CA connection), according to allocated resources from the core network.

At step 604, the first UE may determine to operate in a carrier aggregation mode. In some embodiments, the first UE may determine to operate in the carrier aggregation mode for communication via the SL connection. The first UE may determine to operate in the carrier aggregation mode based on or according to resources allocated by the network. As described above, as part of establishing the SL connection, the core network may allocate certain resources for SL connections, such as certain resources in the unlicensed frequency band, across multiple frequency bands, etc. The first device may determine to operate in the carrier aggregation mode, according to the resources allocated by the core network. For example, where the core network allocates resources across multiple frequency bands, the first device may determine to operate in the carrier aggregation mode (e.g., to aggregate multiple channels across the different frequency bands for the SL connection).

At step 606, the first UE may determine parameters. In some embodiments, the first UE may determine a set of predefined parameters for operating in the carrier aggregation mode. The first UE may determine the set of predefined parameters responsive to determining to operate in the carrier aggregation mode. In some embodiments, the first UE may determine the set of predefined parameters according to the resources allocated by the core network. The set of predefined parameters may include a selected sub-carrier spacing (SCS) value (e.g., from a plurality of SCS values). In some embodiments, the first UE may determine, identify, or otherwise select corresponding parameters based on or according to the selected SCS value (e.g., a size of resource block, a maximum transmission bandwidth, a minimum guardband, etc.). In some embodiments, the first UE may determine, identify, or otherwise select parameters in which to operate the SL connection in the carrier aggregation mode based on, according to, and/or using information included in Tables 1 through 13.

At step 608, the first UE may transmit an indication. In some embodiments, the first UE may transmit, send, communicate, or otherwise provide the indication to the second UE. The fire UE may provide the indication to the second UE, to indicate that the second UE is to operate the SL connection in carrier aggregation mode. In some embodiments, the first UE may provide the indication to the second UE via the SL connection. In some embodiments, the first UE may provide the indication to the second UE via out-of-band signaling (e.g., via a Bluetooth signaling, a near-field communication signaling, a local area network (LAN) signaling, or any other non-SL signaling). The first UE may provide the indication responsive to determining to operate in the carrier aggregation mode, responsive to determining the parameters, etc.

At step 610, the second UE may determine to operate in a carrier aggregation mode. The second UE may determine to operate in the carrier aggregation mode based on or according to the indication (e.g., sent at step 612). For example, the second UE may receive the indication from the first UE, where the indication indicates to operate in carrier aggregation mode, and the second UE may determine to operate in the carrier aggregation mode according to the indication. In some embodiments, the second UE may determine to operate in the carrier aggregation mode in a manner similar to the first UE. For example, the second UE may determine to operate in the carrier aggregation mode based on resources allocated for the SL connection (e.g., which may be signaled by the core network to the second UE, identified in the indication received from the first UE, etc.).

At step 612, the second UE may determine parameters. In some embodiments, the second UE may determine parameters (e.g., predefined parameters) for operating the SL connection. Similar to determining to operate in the carrier aggregation mode, the second UE may determine the parameters based on information included in the indication (e.g., the parameters themselves, information which the second UE can use to independently derive / determine the parameters, and so forth). At step 614, UEs may operate the SL connection. In some embodiments, the first UE and the second UE may operate the SL connection according to the parameters determined at steps 606 and 612. The first UE and the second UE may operate the SL according to the parameters, by controlling signaling / transmit or receiving power, transmission bandwidth, guardbands, input levels, adjacent channel selectivity and parameters, in-band / out-of-band blocking parameters, spurious response parameters, and/or wideband intermodulation parameters, for signaling on the SL connection between the first UE and the second UE. In other words, the UEs may operate the SL connection by, e.g., transmitting or receiving SL signals using carrier aggregation, according to the predetermined / predefined parameters.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or nonvolatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence has any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the appended claims.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

**Claims**

1. A method, comprising:

   establishing, by a first user equipment (UE), a sidelink connection with a second UE;
   determining, by the first UE, to operate in a carrier aggregation mode, for communication via the sidelink connection; and
   operating, by the first UE, the sidelink connection according to a set of predefined parameters per component carrier (CC), responsive to determining to operate in the carrier aggregation mode.

2. The method of claim 1, wherein the set of predefined parameters comprise a selected sub-carrier spacing (SCS) value selected from a plurality of SCS values.

3. The method of claim 2, wherein operating the sidelink connection comprises modifying a size of a resource block (RB) size according to the SCS value.

4. The method of claim 2, wherein operating the sidelink connection comprises selecting a maximum transmission bandwidth according to the SCS value; and, optionally
   wherein the maximum transmission bandwidth is selected according to the SCS value and a channel bandwidth corresponding to the sidelink connection.

5. The method of claim 2, wherein operating the sidelink connection comprises selecting a minimum guardband, according to the SCS value; and, optionally
   wherein the minimum guardband is selected according to the SCS value and a channel bandwidth corresponding to the sidelink connection.

6. The method of any preceding claim, wherein the set of predefined parameters comprise a reference measurement channel configuration corresponding to an adjacent channel selectivity (ACS) configuration.

7. The method of any preceding claim, further comprising transmitting, by the first UE to the second UE, a signal indicating to operate in the carrier aggregation mode.

8. A first user equipment (UE), comprising:

   a wireless transceiver; and
   one or more processors configured to:

   establish, via the wireless transceiver, a sidelink connection with a second UE;
   determine to operate in a carrier aggregation mode, for communication via the sidelink connection; and
   operate the sidelink connection according to a set of predefined parameters per component carrier (CC), responsive to determining to operate in the carrier aggregation mode.

9. The first UE of claim 8, wherein the set of predefined parameters comprise a selected sub-carrier spacing (SCS) value selected from a plurality of SCS values.

10. The first UE of claim 9, wherein operating the sidelink connection comprises modifying a size of a resource block (RB) size according to the SCS value.

11. The first UE of claim 9, wherein operating the sidelink connection comprises selecting a maximum transmission bandwidth according to the SCS value; and, optionally
    wherein the maximum transmission bandwidth is selected according to the SCS value and a channel bandwidth corresponding to the sidelink connection.

12. The first UE of claim 9, wherein operating the sidelink connection comprises selecting a minimum guardband, according to the SCS value; and, optionally
    wherein the minimum guardband is selected according to the SCS value and a channel bandwidth corresponding to the sidelink connection.

13. The first UE of claim 8, wherein the set of predefined parameters comprise a reference measurement channel configuration corresponding to an adjacent channel selectivity (ACS) configuration.

14. The method of any of claims 1 to 7 or the first UE of any of claims 8 to 13, wherein the first UE comprises at least one of a first UE of a first pedestrian or a first vehicle, and the second UE comprises at least one of a second UE of a second pedestrian or a second vehicle.

15. A first user equipment (UE), comprising:

   a wireless transceiver; and
   one or more processors configured to:

      establish, via the wireless transceiver, a sidelink connection with a second UE;
      receive, from the second UE, an indication to operate in a carrier aggregation mode, for communication via the sidelink connection; and
      operate the sidelink connection according to a set of predefined parameters per component carrier (CC), responsive to determining to operate in the carrier aggregation mode.

100

Base Station
110

118

Wireless Interface
112

Processor
114

Memory
116

130A

UE
120A

128

Wireless Interface
122

Processor
124

Memory
126

130B

130N

UE
120B

• • •

UE
120N

FIG. 1

200

Console
210

Wireless Interface
215

Processor
230

Head Wearable Display
250

Sensors
255

Wireless Interface
265

Processor
270

Electronic Display
275

Lens
280

Compensator
285

FIG. 2

250

Band
310

Left
Side
340E

Front Rigid Body
305

Top Side
340B

Wireless
Interface
265

Processor
270

Bottom
Side
340C

Right
Side
340D

Front
Side
340A

Sensors
255

FIG. 3

Computing System 414

Network Interface 420

Processing Unit(s) 416

Storage 418

User Input Device 422

User Output Device 424

# FIG. 4

500

FIG. 5

600

Primary UE 502                                    Secondary UE 504

Establish Sidelink Connection
602

Determine to Operate in CA Mode
604

Determine Parameters
606

Determine to Operate in CA Mode
610

Transmit Indication
608

Determine Parameters
612

Operate Sidelink Connection
614

FIG. 6

EP 4 507 238 A1

## EUROPEAN SEARCH REPORT

Application Number

EP 24 19 2190

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/361175 A1 (HOU YANZHAO [CN] ET AL) 10 November 2022 (2022-11-10) * page 16, paragraph [40] - page 19, paragraph [62]; figure 7 * ----- | 1-15 | INV. H04L5/00 |
| X | HUAWEI ET AL: "On sidelink CA", 3GPP DRAFT; R4-2308607, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 4, no. Incheon, KR; 20230522 - 20230526 15 May 2023 (2023-05-15), XP052387460, Retrieved from the Internet: URL:https://ftp.3gpp.org/tsg_ran/WG4_Radio /TSGR4_107/Docs/R4-2308607.zip R4-2308607 On sidelink CA.docx [retrieved on 2023-05-15] * page 1 - page 3; tables 1, 2 * ----- | 1-15 | |

TECHNICAL FIELDS
SEARCHED (IPC)

H04L

The present search report has been drawn up for all claims

| Place of search | Date of completion of the search | Examiner |
|---|---|---|
| The Hague | 6 January 2025 | Gökceli, Selahattin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 507 238 A1**

## ANNEX TO THE EUROPEAN SEARCH REPORT
## ON EUROPEAN PATENT APPLICATION NO.

EP 24 19 2190

06-01-2025

| Patent document cited in search report | Publication date | Patent family member(s) | | Publication date |
|---|---|---|---|---|
| US 2022361175 A1 | 10-11-2022 | AU | 2018312704 A1 | 26-03-2020 |
| | | CA | 3072378 A1 | 14-02-2019 |
| | | CN | 109379171 A | 22-02-2019 |
| | | CN | 110603876 A | 20-12-2019 |
| | | CN | 117061075 A | 14-11-2023 |
| | | EP | 3664548 A1 | 10-06-2020 |
| | | JP | 7222390 B2 | 15-02-2023 |
| | | JP | 2020530226 A | 15-10-2020 |
| | | KR | 20200035957 A | 06-04-2020 |
| | | US | 2020187208 A1 | 11-06-2020 |
| | | US | 2022361175 A1 | 10-11-2022 |
| | | WO | 2019029435 A1 | 14-02-2019 |

EPO FORM P0459

For more details about this annex : see Official Journal of the European Patent Office, No. 12/82